# EUROPEAN PATENT APPLICATION

(11) **EP 2 679 908 A2**
(43) Date of publication of application: **01.01.2014**
(21) Application number: 13156569.9
(22) Date of filing: 25.02.2013
(51) Int. Cl.: F24B 5/02

(54) **Stove with additional airflow**

(30) Priority: 27.06.2012 GB 201211385
(71) Applicant: Hunter Stoves Limited, Exeter, Devon EX5 4RJ (GB)
(72) Inventor: Young, Peter, Exeter, Devon EX5 4RJ (GB); Percival, Philip, Exeter, Devon EX5 4RJ (GB)
(74) Representative: Howell, Matthew Dafydd

(57) **Abstract**

The invention provides a stove, and method of operating the stove, in which an additional air flow provides improved operating efficiency and other benefits. A stove according to the invention comprises a single closable access opening for supplying fuel to the stove, and a firebox having a base arranged to support burning solid fuel, a front face including the access opening, and a rear face opposite the front face. The stove also comprises a secondary air flow supply having a first outlet at the front face of the firebox that is arranged to direct a first air flow from the secondary air flow supply across the access opening and towards the base of the firebox, and a second outlet at the rear face of the firebox that is arranged to direct a second air flow from the secondary air flow supply from the rear face towards the base of the firebox. The second outlet is closer to the base than the first outlet.

## Description

### FIELD OF THE INVENTION

The present invention relates to stoves, and in particular to stoves for burning solid fuel which have an access door for sealing the firebox so that air is supplied to the burning fuel only via one or more air supplies providing one or more air flows into the firebox.

### BACKGROUND OF THE INVENTION

Known solid fuel stoves, such as wood-burning stoves or multi-fuel stoves, incorporate one or more air flow supplies for supporting combustion of the fuel. Typically, such stoves include a primary air flow supply which is provided directly to the solid fuel and serves to aid ignition of the fuel. This primary air flow supply may in some cases be closed by the user once the fuel is alight.

Such stoves also commonly include a secondary air flow supply which directs an air flow across the access door of the stove. This air flow serves two purposes: it helps to keep a window in the access door clean and free of soot and other combustion debris; and it provides a supply of air to support continued combustion of the ignited fuel.

Solid fuel stoves may also include a tertiary air flow supply which directs an air flow from an outlet near the top of the firebox. This tertiary air flow supply serves to aid combustion of gases rising from the burning fuel, and consequently helps to reduce particulate emissions from the stove.

### SUMMARY OF THE INVENTION

The present inventor has determined that a problem with known stoves is that some regions of the firebox may not receive a sufficient supply of air to support combustion. The inventor has found that this is a particular problem in fireboxes which do not have a sufficient degree of internal air mixing caused by convection currents. Such fireboxes may be shorter than they are wide, i.e. have a low aspect ratio, and/or may have an upper baffle which slopes steeply towards the flue outlet. At its most general, the present invention proposes providing an additional secondary air flow supply, so that secondary air (i.e. combustion-supporting air) is directed towards the base of the firebox both from an outlet at the front of the firebox and an outlet at the back of the firebox.

A first aspect of the invention provides a solid fuel stove comprising a single closable access opening for supplying fuel to the stove, the stove including: a firebox having a base arranged to support burning solid fuel, a front face including the access opening, and a rear face opposite the front face; and a secondary air flow supply having a first outlet at the front face of the firebox that is arranged to direct a first air flow from the secondary air flow supply across the access opening and towards the base of the firebox, and a second outlet at the rear face of the firebox that is arranged to direct a second air flow from the secondary air flow supply towards the base of the firebox, wherein the second outlet is nearer the base of the firebox than the first outlet.

By providing two secondary flow outlets - one at the front face of the firebox, and one at the rear face - solid fuel in all parts of the firebox are provided with sufficient oxygen to support efficient burning of all the fuel. This reduces the emission of smoke and other airborne particulates, and minimises residual ash. A result of locating the second outlet closer to the base (i.e. closer to the fuel) than the first outlet is that combustion may be maintained even when the stove is operating significantly below its nominal output. That is, in circumstances where the volumetric air flow supplied by the secondary air flow supply is so low that the first air flow from the first outlet is not able to overcome the draw of the flue of the firebox, and is thus evacuated before aerating the solid fuel, the second air flow from the second outlet is not similarly affected and is able to maintain aeration of the fuel.

Arranging the outlets so that the first air flow is directed across the access opening, towards the base, and the second air flow is directed from the rear face towards the base of the firebox has many advantages. As in known stoves, the first air flow acts to prevent build up of soot and other combustion by-products on a window of the access opening, as well as providing combustion-supporting air to solid fuel towards the front of the firebox. The novel second air flow provides combustion-supporting air to solid fuel towards the back of the firebox, thus ensuring that all the fuel is fully burned and therefore improving the efficiency of the stove. By directing the second air flow downwardly, towards the base, this effect is enhanced since air is provided directly to the fuel.

The second outlet may have a smaller cross-sectional area than the first outlet. Such a difference in size of the first and second outlets has the effect of ensuring that the second air flow has a higher velocity than the first air flow. The volumetric flow rate of the two air flows is considered to be dependent on the volumetric flow rate from the secondary air flow supply: that is, the relative proportions of the volumetric flow rates of the two air flows may change with the volumetric flow rate of the secondary air flow supply. Thus, the volumetric flow rates of the two air flows may be substantially the same, or may be higher at the first outlet than at the second outlet, particularly when the stove is operating at its nominal output or above, but the reduced cross-sectional area of the second outlet causes the velocity of the second air flow to be higher. This nozzle effect ensures that solid fuel near the back of the firebox is sufficiently aerated to burn efficiently. The combination of providing the second outlet nearer to the base (i.e. nearer to the fuel) than the first outlet, and providing a faster air flow through the second outlet, provides for particularly efficient combustion.

The second outlet may be positioned in an upper half of the rear face, i.e. further from the base than a lower half of the rear face. Thus, the second outlet may be located above the upper extent of solid fuel within the firebox, so that the second air flow therefrom is directed downwardly towards the upper surface of the fuel rather than directly into its midst.

The secondary air flow supply preferably comprises a secondary air flow valve arranged to control the air supply to the first and second outlets of the secondary air flow supply. The valve may be used by the user to simultaneously control both the first and second air flows, and thereby to control the rate of combustion of solid fuel within the firebox.

The second outlet of the secondary air flow supply may include a conduit having a first portion adjacent the rear face and arranged to permit air therein to flow in a first direction away from the base. In this way, the air of the second air flow may be pre-heated as it flows adjacent the rear face when it is heated by a fire within the firebox. Pre-heating the second air flow serves to improve the efficiency of combustion. In addition, the conduit serves to provide a change of direction of the second air flow before it enters the firebox. This change of direction helps to prevent unwanted reverse flow of flue gases (i.e. combustion gases from the firebox) through the second outlet, from where they may escape into the room in which the stove is installed. Such a reverse flow may typically be a particular problem when the access door is open because the pressure differences in such a situation cause a reduction in the draw imposed by the flue and could otherwise cause flue gases to be draw in by the second outlet. However, the arrangement of the first portion of the conduit described above provides a high resistance to such unwanted reverse flows, because it requires the flue gases to flow downwardly.

The conduit may have a second portion interconnecting the first portion with an opening in the rear face, the second portion being arranged to direct the second air flow in a second direction substantially opposite to the first direction. Thus, the second portion serves to redirect the second air flow so that it flows downwardly towards the base to aerate the burning solid fuel.

The stove may include a baffle extending from the rear face towards the front face to partially enclose the firebox. Such a baffle serves to slow the rate of evacuation of smoke and other combustion gases from the firebox, to prevent undesirable heat loss and to ensure that as much combustible material in those combustion gases as possible is burned within the firebox. The baffle may be inclined such that its distance from the base increases with distance from the rear face. Such an arrangement may be necessary to ensure efficient evacuation of smoke and other combustion gases from the firebox, but may have the undesirable effect of reducing circulation within the firebox caused by convection currents. In some prior art stoves such reduced circulation can lead to poor aeration towards the rear of the firebox, but the second secondary air flow of the present invention solves this problem.

The stove may include a tertiary air flow supply having an outlet positioned further from the base than the second outlet of the secondary air flow supply, the outlet being arranged to direct an air flow from the tertiary air flow supply to an upper half of the firebox. The tertiary air flow serves to provide an air flow above the burning solid fuel to support burning of combustible materials in the combustion gases rising from the burning fuel. The outlet may be provided in the rear face and arranged to direct the air flow from the rear face towards the front face.

Alternatively and/or in addition, the stove may include a primary air flow supply having an outlet (optionally in the rear face) positioned closer to the base than the second outlet of the secondary air flow supply, the outlet being arranged to direct an air flow from the primary air flow supply towards the base of the firebox. The primary air flow supply is thus able to provide an air flow directly into the midst of the burning solid fuel in order to provide a high degree of aeration during ignition of the fuel.

Such a primary air flow supply may comprise a primary air flow valve arranged to control the air flow of the primary air flow supply independently from the first and second air flows of the secondary air flow supply. Thus, the primary air flow valve may be closed to stop the air flow from the primary air flow supply after ignition of the fuel. Continued supply of air via the primary air flow supply may cause the fire to be extinguished, or may promote undesirably high levels of carbon monoxide emissions.

The stove may comprise an inset stove arranged to be received in a recess in a wall such that the firebox is substantially concealed within the recess. Such stoves are typically restricted in terms of shape and size, which can, in prior art stoves, lead to a compromised firebox layout with lower than desirable levels of air circulation caused by convection currents. The second secondary air flow of the present invention solves this problem by providing air to the back of the firebox.

The firebox may have an internal shape such that in a cross-section taken in a plane parallel to the front face, its width is greater than its height. Such configurations in known prior art stoves suffer from the problem of reduced air circulation as discussed in relation to inset stoves above, this problem being solved by the second secondary air flow of the present invention.

A second aspect of the invention provides a method of operating a stove having a single closable access opening for supplying fuel to the stove, the stove comprising a firebox having a base arranged to support burning solid fuel, a front face including the access opening, and a rear face opposite the front face, the method including the steps of: supplying solid fuel to the base of the firebox via the access opening; igniting the fuel; and providing a secondary air flow into the firebox, the secondary air flow being divided into a first secondary air flow directed across the access opening towards the base of the firebox, and a second air flow directed from the rear face towards the base of the firebox, the second secondary air flow entering the firebox at a distance from the base that is smaller than a distance from the base at which the first secondary air flow enters the firebox.

By splitting the secondary air flow into two separate air flows - one at the front face of the firebox, and one at the rear face - solid fuel in all parts of the firebox are provided with sufficient oxygen to support efficient burning of all the fuel. This reduces the emission of smoke and other airborne particulates, and minimises residual ash. The fact that the second secondary air flow enters the firebox at a point nearer to the base (i.e. nearer to the fuel) than the first secondary air flow ensures that combustion may be maintained even when the stove is operating significantly below its nominal output. That is, in circumstances where the volumetric air flow supplied by the secondary air flow supply is so low that the first air flow at the front face is not able to overcome the draw of the flue of the firebox, and is thus evacuated before aerating the solid fuel, the second air flow at the rear face is not similarly affected and is able to maintain aeration of the fuel.

By directing the first secondary air flow across the access opening towards the base, and directing the second secondary air flow from the rear face towards the base, the first secondary air flow serves to keep a window covering the access opening clear of soot and other combustion debris, and to provide air to support combustion at the front of the firebox, while the second secondary air flow serves to support combustion of fuel near the back of the firebox.

In some embodiments the second secondary air flow may have a higher velocity than the first secondary air flow. Having a higher velocity second secondary air flow, that is nearer the fuel than the second secondary air flow, ensures that solid fuel near the back of the firebox is sufficiently aerated to burn efficiently.

The method may further include the step of controlling the rate of burn of the fuel by controlling the rate of flow of air from the secondary air flow supply into the firebox.

The method optionally includes pre-heating the first and second secondary air flows before introducing them into the firebox, the first and second secondary air flows preferably being pre-heated by flowing adjacent the rear face of the firebox. Such pre-heating of the air flows serves to increase efficiency of combustion.

The method may additionally include continuously providing a tertiary air flow into an upper half of the firebox, the tertiary air flow being positioned further from the base than the second secondary air flow. This additional air flow acts to promote combustion of combustible materials in combustion gases emitted by burning solid fuel in the firebox, and thereby avoids undesirable emission into the atmosphere of such materials. The tertiary air flow is optionally directed from the rear face towards the front face.

The method may further include providing a primary air flow into the firebox towards the base thereof during ignition of the fuel, and stopping the primary air flow after ignition of the fuel. The primary air flow thus supplies oxygen to the solid fuel during ignition, in order to promote such ignition. After ignition, continued combustion is supported by the secondary air flows.

### BRIEF DESCRIPTION OF THE DRAWINGS

Embodiments of the invention will now be described with reference to the accompanying drawings, in which:
Figure 1 shows front and side views of a stove according to an embodiment of the present invention;
Figure 2 shows a cross-sectional view taken at the line labelled A-A in Figure 1;
Figure 3 shows a detail view of the region labelled B in Figure 2;
Figures 4A and 4B provide an illustrative comparison of combustion within a prior art stove (Fig. 4A) and combustion within a stove according to the present invention (Fig. 4B) when those stoves are operating at a nominal rated output; and
Figures 5A and 5B provide an illustrative comparison of combustion within a prior art stove (Fig. 5A) and combustion within a stove according to the present invention (Fig. 5B) when those stoves are operating at a reduced output

### DETAILED DESCRIPTION OF EMBODIMENT(S)

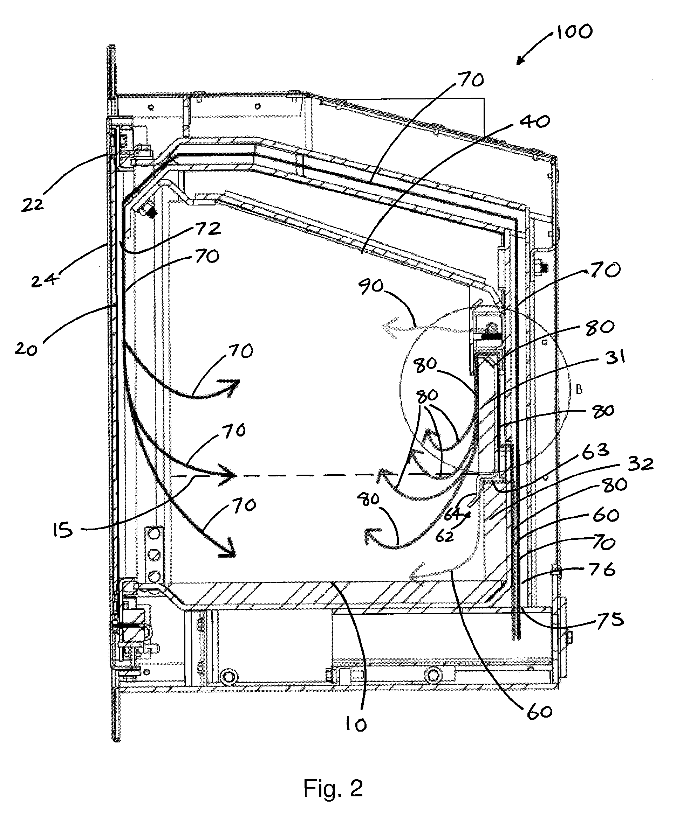

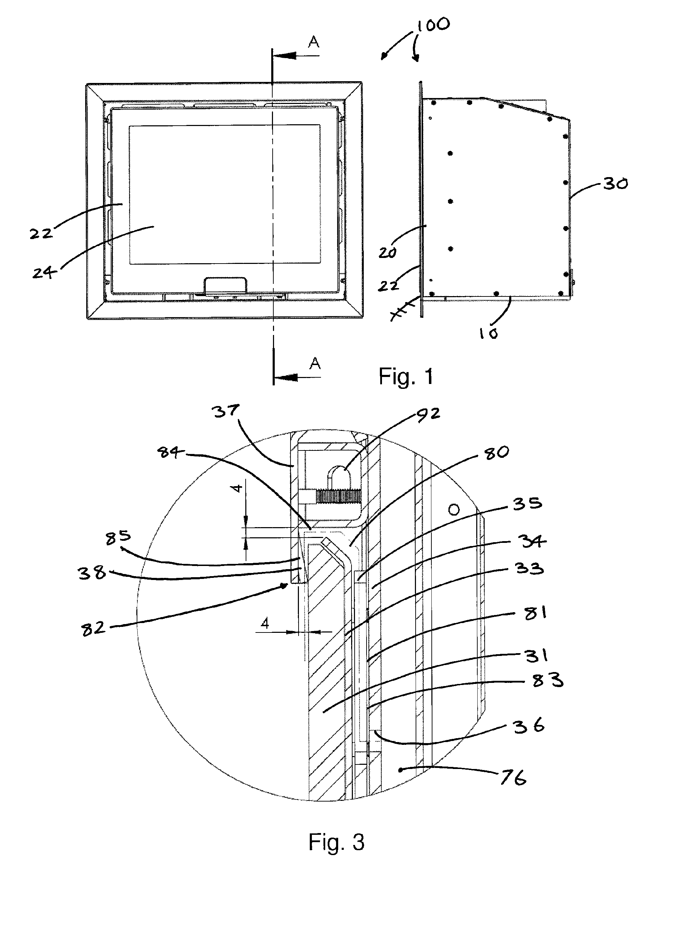

The stove 100 shown in Figs. 1 to 5 has a firebox 50 with a base 10, front face 20, rear face 30, and upper baffle 40. In use, solid fuel such as wood (not shown) is placed on the base 10 and ignited. The dashed line 15 shown in Fig. 2 indicates the approximate upper level of solid fuel during use. The front face 20 includes a door 22 which includes a glass window 24 for viewing the burning fuel within the firebox 50, and which is closable to seal an access opening through which the fuel can be passed. The firebox 50 also has a flue 55 (not shown in Figs. 1 to 3) which evacuates smoke and other airborne combustion waste from the firebox. The baffle 40 slopes upwardly (i.e. away from the base 10) from the rear face 30 towards the front face 20, so that it partially encloses the firebox 50. The baffle 40 thus serves to slow the passage of smoke and other combustion gases out from the firebox via the flue 55.

There are three separate air flow supplies to the firebox 50: a primary air flow supply which provides a primary air flow 60; a secondary air flow supply which provides a first secondary air flow 70 and a second secondary air flow 80; and a tertiary air flow supply which provides a tertiary air flow 90. In general terms, the primary air flow 60 serves to support ignition of the fuel, the secondary air flows 70, 80 support continued combustion of the ignited fuel, and the tertiary air flow 90 supports ignition and combustion of airborne combustion gases.

Each of the primary, secondary and tertiary air flow supplies is independent of the others. The primary air flow supply is controllable by the user via a primary valve (not shown), the secondary air flow supply is controllable by the user via a secondary valve (not shown), and the tertiary air flow supply provides a continuous steady supply of air to the tertiary air flow 90. In use, the user can initially open both the primary and secondary valves, before igniting the fuel. Once the fuel is burning the user can then close the primary valve and adjust the secondary valve to control the rate of combustion of the fuel. The tertiary air flow 90 provides a constant flow of air into the firebox 50 during both ignition and ongoing combustion, in order to promote combustion of any combustible material in the gases and smoke rising from the burning solid fuel.

The primary 60, first secondary 70, second secondary 80 and tertiary 90 air flows each provide different types of air flow to different regions of the firebox 50. The primary air flow 60 has an outlet 62 which extends laterally (i.e. into the page as shown in Fig. 2) along a lower half of the rear face 30 of the firebox 50. The outlet 62 includes a passage 63 which extends generally horizontally through the rear face 30, and a flow director 64 which provides a shield, or baffle, that partially obscures the passage 63 so as to direct the air flow downwardly towards the base 10. This arrangement enables the primary air flow 60 to direct combustion-promoting air directly to the solid fuel during ignition. The primary air flow 60 is typically unsuitable for use during the sustained combustion phase after ignition, since it can have the effect of blowing out the fire and can also raise carbon monoxide emissions.

The first 70 and second 80 secondary air flows have a common inlet 75 that extends laterally along the base of an external surface of the rear face 30, near the junction between the rear face 30 and the base 10 of the firebox 50. The air travels up a common passage 76 adjacent the external face of the rear face 30, before splitting up to provide the first 70 and second 80 secondary air flows.

The first secondary air flow 70 has a laterally-extending (i.e. extending into the page as shown in Fig. 2) conduit 71 which interconnects the common passage 76 with an outlet 72 that is positioned near the top of the door 22 and extends laterally along the front face 20. The conduit 71 follows a path around the periphery of the firebox 50 so that it extends adjacent an external surface of the back face 30 and thereby becomes pre-heated before entry into the firebox 50. Such pre-heating improves the operating efficiency of the stove. The outlet 72 directs the air downwardly, towards the base 10, so that it flows across the window 24 of the door 22. This downwards flow of air supports continued combustion of the solid fuel. It also ensures that the window 24 is kept relatively clear of soot and other combustion by-products that may obscure the user's view of a fire within the firebox.

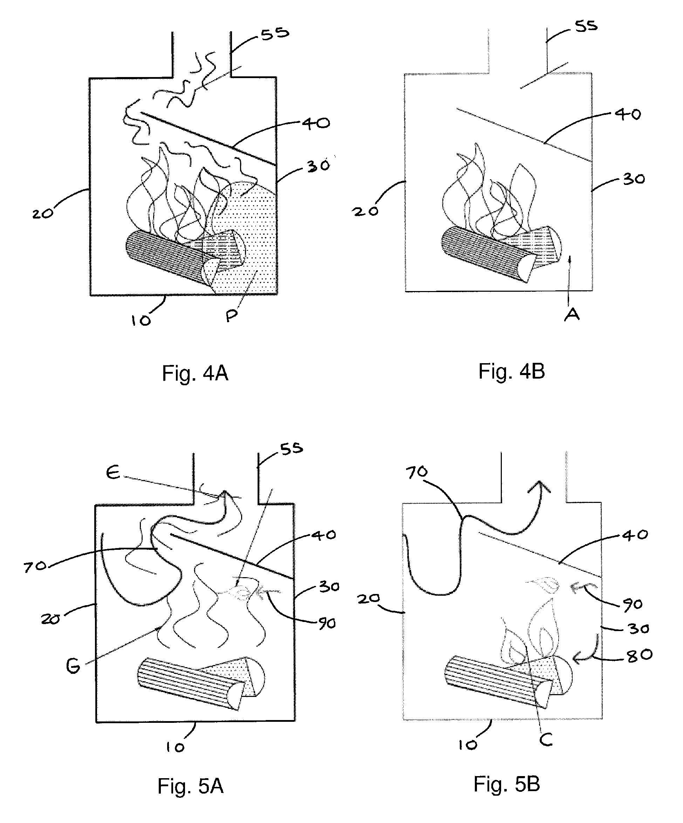

Fig. 2 illustrates the flow of air from the outlet 72 of the first secondary air flow 70 when the stove is operating at its nominal rated output of 4.9 kW; here, the secondary valve is approximately half open so that the air is provided directly to the burning solid fuel at the base 10, as indicated by the arrows labelled 70. The nominal output is typically the output at which the stove is most efficient under test conditions, but the secondary valve can be incrementally closed to reduce output or incrementally opened to increase output as necessary. Incremental closing of the secondary valve has the effect of incrementally decreasing the vertical distance from the outlet 72 that the air can travel. Eventually, the flow of air permitted by the secondary valve is insufficient to overcome the draw of the flue 55, and the air is thus evacuated by the flue 55 before it can be used in the combustion process, as illustrated by arrows E in Figs. 5A and 5B. Fig. 5A illustrates that in such a condition a prior art stove with only a first secondary air flow 70, and no second secondary air flow 80, may produce an unacceptably high amount of smoke and other combustion gases, G, and may ultimately go out. The tertiary air flow 90 may only be able to ignite some of the combustible material in the combustion gases, so that the unburned material is evacuated via the flue 55 and released into the atmosphere. Fig. 4A illustrates that such a prior art stove will also produce unacceptable levels of smoke emission even when operating at its nominal rated output, because of poor combustion at the back of the firebox as indicated at P.

The second secondary air flow 80 has a convoluted conduit 81 which interconnects the common passage 76 with an outlet 82 in the upper half of the rear face 30 of the firebox 50, i.e. at a position higher than the outlet 62 of the primary air flow 60. As can most clearly be seen in Fig. 3, the convoluted conduit 81 includes a first portion 83 which extends upwardly to a second portion 84 which extends generally horizontally through the rear face 30, and which itself leads to a third portion 85 which extends generally downwardly towards the base 10. Thus, the convoluted conduit 81 acts to change the direction of air travelling from the secondary air flow supply through approximately 180 degrees. By passing both adjacent to and through the rear face 30 (which will be heated by the fire within the firebox 50) the convoluted conduit 81 enables the air within to be pre-heated. This pre-heating improves the operating efficiency of the stove. The convoluted shape of the conduit 81 also serves to prevent unwanted back flow of combustion gases from the firebox 50 through the outlet 82 and out into the atmosphere (the room in which the stove 100 is installed) via the common passage 76.

The outlet 82 has a smaller overall cross-sectional area than the outlet 72 of the first secondary air flow 70, so that the second secondary air flow 80 has a higher velocity than the first secondary air flow 70. The second secondary air flow 80 improves the overall efficiency of the fuel combustion by ensuring that the lower-rear region of the firebox is provided with combustion-supporting air, as illustrated in Fig. 4B which shows improved aeration at A as compared with the prior art stove of Fig. 4A. Moreover, even in situations in which the stove is operating at a much reduced output and the secondary valve is only slightly open such that the first secondary flow 70 is not able to support combustion, as discussed above, the second secondary air flow 80 is still able to provide air to the fuel, as indicated at C in Fig. 5B. Thus, the second secondary air flow 80 also avoids unwanted extinguishing of the fire in the event that the stove is operating below its nominal rated output (i.e. the secondary valve is open to only a limited degree).

The tertiary air flow 90 has an outlet 92 extending laterally along the rear face 30, near the top of the rear face 30 and thus near the upper extent of the firebox 50. The outlet 92 provides air to the upper half of the firebox 50 via a plurality of apertures (not shown) in the internal surface of the rear face 30. The apertures are distributed laterally along the rear face, and serve to provide jets of air which are directed towards the front face 20. The jets of air promote combustion of any combustible material in the combustion gases rising from the burning solid fuel. This combustion is typically visible as blue flames above the level of the yellow flames produced by the solid fuel combustion.

The primary outlet 62 of the primary air flow 60, conduit 71 of the first secondary air flow 70, convoluted conduit 81 and outlet 82 of the second secondary air flow 80, and outlet 92 of the tertiary air flow 90 are each formed by various features of the rear face 30. Thus, the rear face 30 includes upper 31 and lower 32 fire bricks, the lower fire brick 32 extending upwardly from the base 10, and the horizontal passage 63 of the primary air flow 60 being defined by a gap between the upper 31 and lower 32 fire bricks. The rear face of the upper fire brick 31 lies adjacent the forward face of an internal metal plate 33, which is formed integrally with the flow director 64 of the primary air flow 60. The first portion 83 of the convoluted conduit 81 of the second secondary air flow is formed between the rear face of the internal metal plate 33 and a back metal plate 34, the two metal plates being separated by a U-shaped spacer plate 35. The back plate 34 extends along the full lateral and vertical extent of the rear face 30, and has a laterally-extending opening 36 that provides an inlet for the second secondary air flow 80 to enter the conduit 81 from the common passage 76. A front metal plate 37, which carries the apertures (not shown) through which the tertiary air flow 90 enters the firebox, overlaps with the upper fire brick 31 to form the third portion 85 of the convoluted conduit 81 of the second secondary air flow 80. A spacer 38 maintains the position of the front metal plate 37 relative to the upper fire brick 31.

To use the stove 100, the user first places solid fuel, such as wood, onto the base 10, and opens the primary and secondary valves to provide maximum volumes of air flowing into the firebox 50 via the primary air flow 60 and first 70 and second 80 secondary air flows. The user then lights the fuel and closes the access door 22. Once that the user is satisfied that the fuel is ignited, he then closes the primary valve so that the primary air flow 60 is stopped, and the first 70 and second 80 secondary air flows provide the air to support continued combustion. He may then adjust the secondary valve to control the volume of air provided via the first 70 and second 80 secondary air flows and thereby control the rate of combustion. During the whole process the tertiary air flow 90 provides a continuous (i.e. non-controllable) air flow which promotes burning of combustible material in the combustion gases released during burning of the solid fuel.

Although the invention has been described above with reference to one or more preferred embodiments, it will be appreciated that various changes or modifications may be made without departing from the scope of the invention as defined in the appended claims.

## Claims

1. A solid fuel stove comprising a single closable access opening for supplying fuel to the stove, the stove including:
a firebox having a base arranged to support burning solid fuel, a front face including the access opening, and a rear face opposite the front face; and
a secondary air flow supply having a first outlet at the front face of the firebox that is arranged to direct a first air flow from the secondary air flow supply across the access opening and towards the base of the firebox, and a second outlet at the rear face of the firebox that is arranged to direct a second air flow from the secondary air flow supply towards the base of the firebox,
wherein the second outlet is closer to the base than the first outlet.

2. A stove according to claim 1, wherein the second outlet has a smaller cross-sectional area than the first outlet.

3. A stove according to claim 1 or claim 2, wherein the secondary air flow supply comprises a secondary air flow valve arranged to control the air supply to the first and second outlets of the secondary air flow supply.

4. A stove according to any of claims 1 to 3, wherein the second outlet of the secondary air flow supply includes a conduit having a first portion adjacent the rear face and arranged to permit air therein to flow in a first direction away from the base.

5. A stove according to claim 4, wherein the conduit has a second portion interconnecting the first portion with an opening in the rear face, the second portion being arranged to direct the second air flow out of the opening in a second direction substantially opposite to the first direction.

6. A stove according to any of claims 1 to 5, comprising a baffle extending from the rear face towards the front face to partially enclose the firebox, the baffle being inclined such that its distance from the base increases with distance from the rear face.

7. A stove according to any of claims 1 to 6, including a tertiary air flow supply having an outlet positioned further from the base than the second outlet of the secondary air flow supply, the outlet being arranged to direct an air flow from the tertiary air flow supply to an upper half of the firebox.

8. A stove according to any of claims 1 to 7, including a primary air flow supply having an outlet positioned closer to the base than the second outlet of the secondary air flow supply, the outlet being arranged to direct an air flow from the primary air flow supply towards the base of the firebox.

9. A stove according to claim 8, wherein the primary air flow supply comprises a primary air flow valve arranged to control the air flow of the primary air flow supply independently from the first and second air flows of the secondary air flow supply.

10. A stove according to any of claims 1 to 9, wherein the stove comprises an inset stove arranged to be received in a recess in a wall such that the firebox is substantially concealed within the recess.

11. A method of operating a stove having a single closable access opening for supplying fuel to the stove, the stove comprising a firebox having a base arranged to support burning solid fuel, a front face including the access opening, and a rear face opposite the front face, the method including the steps of:
supplying solid fuel to the base of the firebox via the access opening;
igniting the fuel; and
providing a secondary air flow into the firebox, the secondary air flow being divided into a first secondary air flow directed across the access opening and towards the base, and a second air flow directed from the rear face towards the base, the second secondary air flow entering the firebox at a distance from the base that is smaller than a distance at which the first secondary air flow enters the firebox.

12. A method according to claim 11, wherein the second secondary air flow has a higher velocity than the first secondary air flow.

13. A method according to claim 11 or claim 12, including pre-heating the first and second secondary air flows before introducing them into the firebox.

14. A method according to claim 13, wherein the first and second secondary air flows are pre-heated by flowing adjacent the rear face of the firebox.

15. A method according to any of claims 11 to 14, including continuously providing a tertiary air flow into an upper half of the firebox, the tertiary air flow being positioned further from the base than the second secondary air flow.

16. A method according to any of claims 11 to 15, including providing a primary air flow into the firebox towards the base thereof during ignition of the fuel, and stopping the primary air flow after ignition of the fuel.
